# EUROPEAN PATENT APPLICATION

(11) **EP 4 192 189 A1**
(43) Date of publication of application: **07.06.2023**
(21) Application number: 21854019.3
(22) Date of filing: 27.07.2021
(51) Int. Cl.: H04W 76/34

(54) **SERVICE PROCESSING METHOD, INFORMATION INDICATION METHOD, AND TERMINAL AND NETWORK DEVICE**

(30) Priority: 03.08.2020 CN 202010768819
(71) Applicant: Datang Mobile Communications Equipment Co., Ltd., Beijing 100085 (CN)
(72) Inventor: YAN, Nan, Beijing 100085 (CN); ZHOU, Rui, Beijing 100085 (CN); ZHANG, Dajun, Beijing 100085 (CN)
(74) Representative: Studio Torta S.p.A.
(86) International application number: PCT/CN2021/108632
(87) International publication number: WO 2022/028276

(57) **Abstract**

The present disclosure provides a service processing method, an information indication method, a terminal, and a network device. The method includes: determining, by a terminal, a service transmission mode or an indication content of an RRC release message; and reserving, by the terminal, a first bearer, according to the indication content or the service transmission mode, when the terminal releases an RRC connection, where the service transmission mode is a service transmission mode of the first bearer.

## Description

### CROSS REFERENCE OF RELATED APPLICATION

The present application claims a priority of Chinese patent application No. 202010768819.8 filed on August 3, 2020, which is incorporated herein by reference in its entirety.

### TECHNICAL FIELD

The present disclosure relates to the technical field of communication, and in particular, to a service processing method, an information indication method, a terminal and a network device.

### BACKGROUND

In some communication systems, the terminal supports connected state, idle state and inactive state, and the terminal needs to release Radio Resource Control (RRC) connection in some state transitions, for example: when the terminal leaves the connected state and enters the idle state or the inactive state, the terminal needs to release the RRC connection. However, when the current terminal releases the RRC connection, all the content of the corresponding bearer(s) are released. It can be seen that the current RRC release method makes the service transmission capability of the terminal relatively poor.

### SUMMARY

Embodiments of the present disclosure provide a service processing method, an information indication method, a terminal and a network device, so as to solve the problem that the service transmission capability of the terminal is relatively poor.

An embodiment of the present disclosure provides a service processing method, including: determining, by a terminal, a service transmission mode or an indication content of an RRC release message; and reserving, by the terminal, a first bearer, according to the indication content or the service transmission mode, when the terminal releases an RRC connection, where the service transmission mode is a service transmission mode of the first bearer.

Optionally, the reserving the first bearer, according to the service transmission mode, when the terminal releases the RRC connection, including: reserving the first bearer, when the terminal releases the RRC connection, in a case that the service transmission mode includes a first transmission mode, where the first transmission mode is multicast, groupcast, or broadcast.

Optionally, the determining, by the terminal, the service transmission mode of the bearer, including: receiving, by the terminal, an RRC configuration information of the first bearer, and determining the service transmission mode of the first bearer according to the RRC configuration information.

Optionally, the RRC configuration information indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or Packet Data Convergence Protocol (PDCP) configuration; or the RRC configuration information explicitly or implicitly indicates the service transmission mode of the first bearer through Radio Link Control (RLC) configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the reserving the first bearer, according to the indication content, when the terminal releases the RRC connection, including: reserving the first bearer, when the terminal releases the RRC connection, in a case that the bearer to be released indicated by the indication content does not include the first bearer; or reserving the first bearer, when the terminal releases the RRC connection, in a case that the bearer to be reserved indicated by the indication content includes the first bearer.

Optionally, the method further includes: releasing a second bearer, when the terminal releases the RRC connection, in a case that the bearer to be released indicated by the indication content includes the second bearer; or releasing the second bearer, when the terminal releases the RRC connection, in a case that the bearer to be reserved indicated by the indication content does not include the second bearer; a service transmission mode of the second bearer includes the first transmission mode, where the first transmission mode is multicast, groupcast, or broadcast.

Optionally, the reserving the first bearer, in a case that the service transmission mode of the first bearer includes at least one of the first transmission mode or the second transmission mode, including: reserving a configuration associated with a first logical channel in the first bearer, and releasing a configuration associated with a second logical channel in the first bearer, where the service transmission mode of the first logical channel is the first transmission mode, and the service transmission mode of the second logical channel is the second transmission mode.

Optionally, the configuration associated with the first logical channel includes at least one of following: an RLC entity associated with the first logical channel, a Medium Access Control (MAC) configuration associated with the first logical channel, or a radio resource associated with the first logical channel; and/or the configuration associated with the second logical channel includes at least one of following: the RLC entity associated with the second logical channel, the MAC configuration associated with the second logical channel, or the radio resource associated with the second logical channel.

Optionally, the method further includes: reporting service information corresponding to the first transmission mode to a network side, when the terminal establishes or restores the RRC connection, in a case that the service transmission mode of the first bearer includes the first transmission mode.

Optionally, the service information includes at least one of following: bearer identification, logical channel identification, or service identification.

Optionally, the service information further includes at least one of following: Service Data Adaptation Protocol (SDAP) configuration information associated with the first transmission mode, Packet Data Convergence Protocol (PDCP) configuration information associated with the first transmission mode, RLC configuration information associated with the first transmission mode, MAC configuration information associated with the first transmission mode, or physical (PHY) configuration information associated with the first transmission mode.

Optionally, the terminal reports the service information through the following item: establishing request message, restoring request message, establishing complete message, or restoring complete message.

An embodiment of the present disclosure also provides an information indication method, including: transmitting, by a network device, an RRC message to a terminal, where an RRC indicates a service transmission mode or an indication content of an RRC release message, and the service transmission mode is a service transmission mode of a first bearer.

Optionally, the service transmission mode includes a first transmission mode, and the first transmission mode is multicast, groupcast, or broadcast.

Optionally, the RRC message includes: RRC configuration information.

Optionally, the RRC configuration message indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the RRC message includes the RRC release message, and the indication content indicates at least one of following: a bearer to be released, or a bearer to be reserved.

Optionally, the bearer to be released includes: a bearer to be released in which the service transmission mode includes the first transmission mode, where the first transmission mode is multicast, groupcast, or broadcast.

Optionally, the method further includes: receiving service information reported by the terminal corresponding to the first transmission mode, when the terminal establishes or restores an RRC connection, in a case that the service transmission mode of the first bearer includes the first transmission mode.

Optionally, the service information includes at least one of following: bearer identification, logical channel identification, or service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or PHY configuration information associated with the first transmission mode.

Optionally, the terminal reports the service information through the following item: establishing request message, restoring request message, establishing complete message, or restoring complete message.

The embodiment of the present disclosure also provides a terminal, including a memory, a transceiver and a processor, where the memory is used for storing computer program; the transceiver is used for transmitting and receiving data under control of the processor; the processor is used for reading the computer program in the memory and performing following operations: determining a service transmission mode or an indication content of an RRC release message; and reserving a first bearer, according to the indication content or the service transmission mode, when the terminal releases an RRC connection, where the service transmission mode is a service transmission mode of the first bearer.

Optionally, the reserving the first bearer, according to the service transmission mode, when the terminal releases the RRC connection, including: reserving the first bearer, when the terminal releases the RRC connection, in a case that the service transmission mode includes a first transmission mode, where the first transmission mode is multicast, groupcast, or broadcast.

Optionally, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the reserving the first bearer, in a case that the service transmission mode of the first bearer includes at least one of the first transmission mode or the second transmission mode, including: reserving a configuration associated with a first logical channel in the first bearer, and releasing a configuration associated with a second logical channel in the first bearer, where the service transmission mode of the first logical channel is the first transmission mode, and the service transmission mode of the second logical channel is the second transmission mode.

Optionally, the processor is further used for: reporting service information corresponding to the first transmission mode to a network side, when the terminal establishes or restores the RRC connection, in a case that the service transmission mode of the first bearer includes the first transmission mode.

The embodiment of the present disclosure further provides a network device, including a memory, a transceiver, and a processor: where the memory is used for storing computer program; the transceiver is used for transmitting and receiving data under control of the processor; and the processor is used for reading the computer program in the memory and performing following operations: transmitting an RRC message to a terminal, where an RRC indicates a service transmission mode or an indication content of an RRC release message, and the service transmission mode is a service transmission mode of a first bearer.

Optionally, the service transmission mode includes a first transmission mode, and the first transmission mode is multicast, groupcast, or broadcast.

Optionally, the RRC message includes an RRC release message, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the processor is further used for: receiving service information reported by the terminal corresponding to the first transmission mode, when the terminal establishes or restores an RRC connection, in a case that the service transmission mode of the first bearer includes the first transmission mode.

The embodiment of the present disclosure further provides a terminal, including: a determining unit, configured to determine a service transmission mode or an indication content of an RRC release message; and a reserving unit, configured to reserve a first bearer, according to the indication content or the service transmission mode, when the terminal releases an RRC connection, where the service transmission mode is a service transmission mode of the first bearer.

The embodiment of the present disclosure further provides a network device, including: a transmitting unit, configured to transmit an RRC message to a terminal, where an RRC indicates a service transmission mode or an indication content of an RRC release message, and the service transmission mode is a service transmission mode of a first bearer.

The embodiment of the present disclosure further provides a processor-readable storage medium, where the processor-readable storage medium stores a computer program, and the computer program is used for enabling the processor to perform the service processing method provided by the embodiments of the present disclosure, or, the computer program is used for enabling the processor to perform the information indication method provided by the embodiments of the present disclosure.

In the embodiments of the present disclosure, the terminal determines the service transmission mode or the indication content of RRC release message; the terminal reserves the first bearer according to the indication content or the service transmission mode, when the terminal releases the RRC connection, where the service transmission mode is the service transmission mode of the first bearer. In this way, the first bearer can be reserved when the RRC connection is released, thereby improving the service transmission capability of the terminal.

### BRIEF DESCRIPTION OF THE DRAWINGS

FIG. 1 is a schematic structural view of a network architecture applicable to an embodiment of the present disclosure;
FIG. 2 is a flowchart of a service processing method provided by an embodiment of the present disclosure;
FIG. 3 is a schematic view of a service configuration provided by an embodiment of the present disclosure;
FIG. 4 is a schematic view of another service configuration provided by an embodiment of the present disclosure;
FIG. 5 is a flowchart of an information indication method provided by an embodiment of the present disclosure;
FIG. 6 is a structural view of a terminal provided by an embodiment of the present disclosure;
FIG. 7 is a structural view of a network device provided by an embodiment of the present disclosure;
FIG. 8 is a structural view of another terminal provided by an embodiment of the present disclosure; and
FIG. 9 is a structural view of another network device provided by an embodiment of the present disclosure.

### DETAILED DESCRIPTION

In order to make the technical problem, technical solution and advantage of the present disclosure that are to be solved clearer, the following will be described in detail with reference to the drawings and specific embodiments.

The term "and/or" in the embodiments of the present disclosure describes the associated relationship between the associated objects, indicating that there can be three relationships, for example, A and/or B, which can be expressed in three cases: A existing alone, A and B existing at the same time, and B existing alone. The character "/" generally represents that the relationship between the front and rear associated objects is a "or" relationship.

The term "multiple" in the embodiments of the present disclosure refers to two or more, and other quantifiers are similar to it.

The technical solutions in the embodiments of the present disclosure will be described clearly and completely below in combination with the drawings in the embodiments of the present disclosure, obviously, the described embodiments are only part of the embodiments in the present disclosure, not all of embodiments. Based on the embodiments in the present disclosure, all other embodiments obtained by those ordinarily skilled in the art without making creative work belong to the scope of protection in the present disclosure.

The embodiments of the present disclosure provide a measurement result reporting method and receiving method, a terminal, and a network device, so as to solve the problem on the poor ability of measurement results reported by the terminal.

Methods and devices are based on the same conception of the present disclosure. Because the principles of solving the problem by the methods and device are similar, the implementation of the device and method can be referred to each other, and the duplication is not repeated.

The technical solutions provided by the embodiments of the present disclosure can be applied to a variety of systems, especially 5G systems. For example, the applicable system may be Global System of Mobile Communication (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, 6G system, etc. This various systems include terminal devices and network devices. The system can also include the core network, such as the Evolved Packet System (EPS), 5G system (5GS), etc.

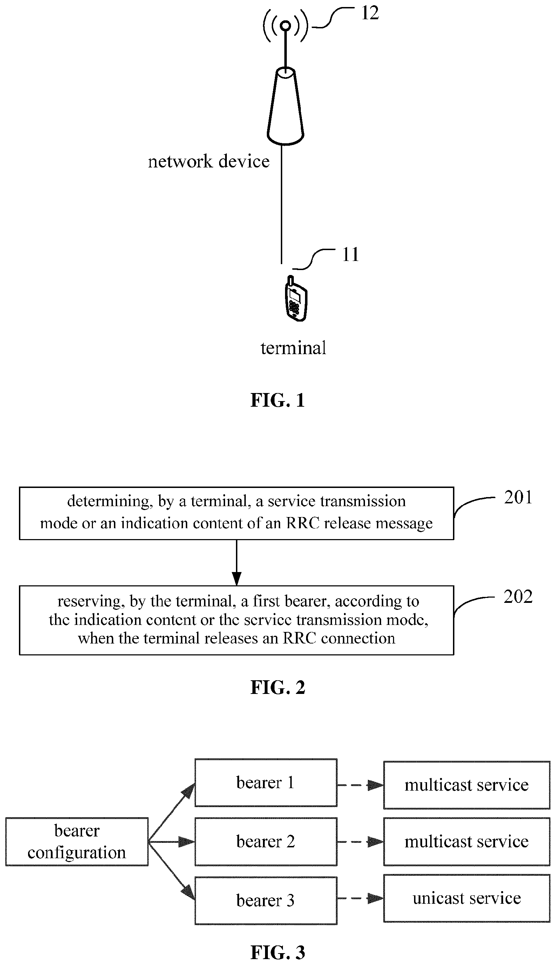

Referring to FIG. 1, FIG. 1 is a schematic structural view of a network architecture applicable to an embodiment of the present disclosure. As shown in FIG. 1, it includes a terminal 11 and a network device 12.

The terminal involved in the embodiments of the present disclosure may be a device that provides voice and/or data connectivity to users, a handheld device with a wireless connection function, or other processing devices connected to a wireless modem. In different systems, the name of the terminal device may be different. For example, in a 5G system, the terminal device may be called as User Equipment (UE). Wireless terminal device can communicate with one or more Core Networks (CN) via a Radio Access Network (RAN). The wireless terminal device may be a mobile terminal device, such as a mobile phone (or called as a "cellular" telephone) and computers with mobile terminal device, such as portable, pocket, hand-held, computer built-in or vehicle-mounted mobile apparatuses, which exchange language and/or data with the radio access network, for example, Personal Communication Service (PCS) phones, cordless phones, Session Initiated Protocol (SIP) phones, Wireless Local Loop (WLL) stations, Personal Digital Assistant (PDA) and other devices. Wireless terminal device may also be called system, Subscriber Unit, Subscriber Station, Mobile Station, Mobile, Remote Station, Access Point, Remote Terminal, Access Terminal, User Terminal, User Agent, and User Device, which are not limited in the embodiments of the present disclosure.

The network device involved in the embodiments of the present disclosure may be a base station, and the base station may include multiple cells that provide services for terminals. Basing on the different specific application scenario, the base station can also be called an access point, or can be a device in the access network that communicates with the wireless terminal device through one or more sectors on the air interface, or other names. Network device can be used to interchange received over-the-air frames with Internet Protocol (IP) packets and act as a router between the wireless terminal device and the rest of the access network, where the rest of the access network can include the IP communication network. Network device may also coordinate attribute management for the air interface. For example, the network device involved in this embodiments of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolutional network device (evolutional Node B, eNB or e-NodeB) in a long term evolution (LTE) system, 5G base station (gNB) in the 5G network architecture (next generation system), or a home evolutional base station (Home evolved Node B, HeNB), a Relay Node , a home base station (femto), a pico base station (pico), etc., which are not limited in the embodiments of the present disclosure. In some network structures, a network device may include a Centralized Unit (CU) node and a Distributed Unit (DU) node, and the CU and the DU may also be arranged geographically separately.

One or more antennas can be used between network devices and terminals for Multi Input Multi Output (MIMO) transmission. MIMO transmission may be Single User MIMO (SU-MIMO) or Multiple User MIMO (MU-MIMO). According to the shape and number of root antenna combinations, MIMO transmission may be 2D-MIMO, 3D-MIMO, FD-MIMO, or massive-MIMO, or diversity transmission, precoding transmission, or beamforming transmission, etc.

Referring to FIG. 2, FIG. 2 is a flowchart of a service processing method provided by an embodiment of the present disclosure, as shown in FIG. 2, it includes the following steps:
Step 201, determining, by a terminal, a service transmission mode or an indication content of an RRC release message; and
Step 202, reserving, by the terminal, a first bearer, according to the indication content or the service transmission mode, when the terminal releases an RRC connection, where the service transmission mode is a service transmission mode of the first bearer.

The foregoing service transmission mode may be indicated by the network device, or the terminal determines the service transmission mode of the first bearer according to a protocol agreement mode. In the embodiments of the present disclosure, the service transmission mode of the first bearer may include at least one of the first transmission mode or the second transmission mode, where the first transmission mode is multicast, groupcast, or broadcast, and the second transmission mode is unicast.

The indication content of the aforementioned RRC release message may include at least one of the bearer indicated to be released or the bearer indicated to be reserved, and the indication method may be explicit or implicit indication.

Reserving the first bearer, according to the aforementioned indication content, when the terminal releases the RRC connection, may include: reserving the first bearer, when the terminal releases the RRC connection, in a case that the released bearer indicated by the above indication content does not include the above first bearer, or, when the terminal releases the RRC connection, in a case that the reserved bearer indicated by the above indication content includes the above first bearer.

In the above service transmission mode, reserving the first bearer, when the terminal releases the RRC connection, may be, reserving the first bearer, when the terminal releases the RRC connection, in a case that the above service transmission mode includes a transmission mode that needs to reserve the bearer.

In addition, the aforementioned reserving the first bearer may refer to reserving all or part of content of the first bearer, for example, part of logical channels and related configurations.

In the embodiment of the present disclosure, the bearer may be a Data Resource Bearer (DRB), of course, this is not limited thereto. For example, it may also be another bearer for service transmission defined in a subsequent protocol.

In the embodiment of the present disclosure, through the above steps, the first bearer can be reserved when the RRC connection is released, so that after the terminal releases the RRC connection, it is convenient for the terminal to continue the transmission of the service corresponding to the first bearer, so as to improve the service transmission capability of the terminal, for example, continue to receive service data through the reserved bearer in the disconnected state.

As an optional implementation, the reserving the first bearer according to the service transmission mode, when the terminal releases an RRC connection, including: reserving the first bearer, when the terminal releases the RRC connection, in a case that the service transmission mode includes the first transmission mode, where the first transmission mode is multicast, groupcast, or broadcast.

In this embodiment, the first bearer can be reserved when the RRC connection is released, in a case that the service transmission mode of the first bearer includes multicast, multicast, or broadcast, so that the multicast, groupcast, or broadcast services of the terminal can continue to be received during the transitions between the connected state and the idle state/inactive state, so as to improve the service transmission capability of the terminal.

As an optional implementation, determining, by the terminal, a service transmission mode of the bearer includes: receiving, by the terminal, RRC configuration information of the first bearer, and determining a service transmission mode of the first bearer according to the RRC configuration information.

The above RRC configuration information may explicitly or implicitly indicate the service transmission mode of the first bearer. For example: the RRC configuration information indicates whether the service transmission mode of the first bearer includes the first transmission mode.

In this embodiment, when the network device can use a bearer while reserving the multicast/unicast transmission mode to transmit data, or transmit data through the multicast transmission mode, the corresponding unicast/multicast service category of the bearer is indicated in the RRC configuration information.

Optionally, the RRC configuration information indicates that the service transmission mode of the first bearer is the following one: the first transmission mode; the first transmission mode and a second transmission mode; or the second transmission mode, where the first transmission mode is multicast, groupcast, or broadcast, and the second transmission mode is unicast.

Specifically when the service transmission mode of the first bearer is the first transmission mode and the second transmission mode, the two transmission modes can transmit data of the same service, which is of course not limited.

Further, when the service transmission mode of the first bearer is the first transmission mode and the second transmission mode, reserving the first bearer may be reserving the content related to the first transmission mode, and releasing the content related to the second transmission mode in the first bearer.

In addition, when the RRC configuration message indicates that the service transmission mode of the first bearer is the second transmission mode, the first bearer may be released when the RRC connection is released.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

In this embodiment, it is possible to indicate the service transmission mode of the current bearer in the bearer configuration or PDCP configuration, for example: indicate whether the first transmission mode is included, and if the first transmission mode is included, then the first bearer may establish a separate logical channel for multicast or unicast respectively, and send the service through the air interface in different transmission modes. For example, as shown in FIG. 3, bearer configurations indicate services corresponding to different bearers, where the multicast service indicates that the service transmission mode of the service includes multicast, and the unicast service indicates that the service transmission mode of the service includes unicast.

Optionally, the RLC configuration or logical channel configuration is used for explicitly indicating the service transmission mode of the RLC entity or logical channel; or in a case that no logical channel is configured for the RLC configuration, the RLC configuration implicitly indicates that the service transmission mode of the RLC entity or the logical channel is the first transmission mode.

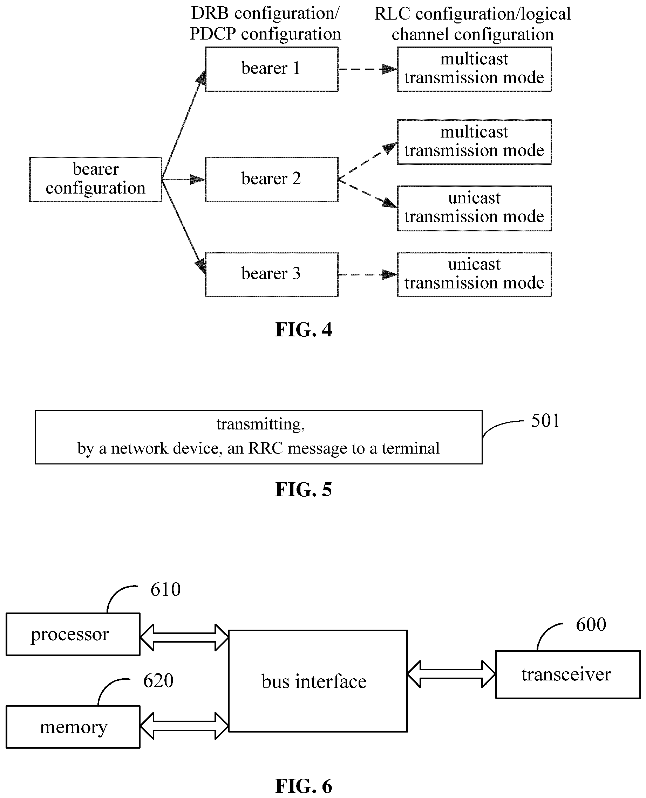

The above-mentioned explicit indication may be indicated as the first transmission mode or the second transmission mode in the RLC configuration/logical channel configuration. If a DRB (or PDCP entity) is associated with an RLC configuration/logical channel identification of the first transmission mode. For example: as shown in FIG. 4, Bearer 1, or the RLC configuration/logical channel associated with the first transmission mode and the second transmission mode respectively, for example: as shown in FIG. 4, Bearer 2, it indicates that the service of the DRB bearer can be sent in multicast mode.

The above-mentioned implicit indication may be content such as logical channel configuration is not carried in the RLC configuration related to the first transmission mode, and a predefined fixed value is used by the configuration of the first transmission mode, such as a fixed value defined by the protocol. For example: if a DRB (or PDCP entity) is associated with at least one RLC configuration that does not have a logical channel configured, the terminal defaults that the DRB is associated with a logical channel of multicast mode, and the services of the DRB bearer can be sent in multicast mode.

As an optional implementation, the indication content indicates at least one of following: a bearer to be released, or a bearer to be reserved, where the bearer to be released may include: a bearer to be released in which a service transmission mode includes a first transmission mode, and the first transmission mode is multicast, groupcast, or broadcast.

Of course, this is not limited, for example, the network device may directly indicate the released bearer or the reserved bearer, and the terminal defaults that these bearers are the bearers of the service transmission mode including the first transmission mode.

Optionally, the reserving the first bearer, according to the indication content, when the terminal releases the RRC connection, including: reserving the first bearer, when the terminal releases the RRC connection, in a case that the bearer to be released indicated by the indication content does not include the first bearer; or reserving the first bearer, when the terminal releases the RRC connection, in a case that the bearer to be reserved indicated by the indication content includes the first bearer.

Optionally, the method also includes: releasing a second bearer, when the terminal releases the RRC connection, in a case that the bearer to be released indicated by the indication content includes the second bearer; or releasing the second bearer, when the terminal releases the RRC connection, in a case that the bearer to be reserved indicated by the indication content does not include the second bearer; a service transmission mode of the second bearer includes the first transmission mode, where the first transmission mode is multicast, groupcast, or broadcast.

In the above embodiment, the above content can be indicated directly through the RRC release message, so that the terminal can reserve the corresponding bearer when releasing the RRC connection, thereby improving the service transmission capability of the terminal, and also avoiding the introduction of new message to save transmission resource.

Further, in the above implementation, it is also possible to avoid reserving bearers for services that do not support to be received in the disconnected state. For example, if some services of the first transmission mode do not support to be received in the disconnected state, it is possible to explicitly indicate which bearers adoptable in the first transmission mode are to be released in the RRC release message, or to explicitly indicate which bearers are to be released. Therefore, the terminal reserves bearers corresponding to other services that can be received in the disconnected state (idle/inactive state), and when the terminal releases the RRC connection, the bearer required to be released in the display notification may be performed according to the indication of the network side.

For example: if it is explicitly indicated which bearers adoptable in the first transmission mode are to be released in the RRC release message, the terminal explicitly releases the bearers. Unicast bearers not explicitly notified are performed to be released. For bearers adoptable in the first transmission mode that are not explicitly notified, the terminal only releases the logical channel and related configuration corresponding to the unicast transmission mode, and reserves the logical channel and related configuration corresponding to the first transmission mode, such as: RLC entity, MAC configuration and wireless resource.

For another example: if it is explicitly indicated which bearers are to be released in the RRC release message, the terminal explicitly releases the bearers, and the bearers not explicitly notified are reserved. If the first transmission mode can be adopted by the bearer not explicitly notified, and there is a unicast transmission mode, the terminal only releases the logical channel and related configuration corresponding to the unicast transmission mode, and reserves the logical channel and related configuration corresponding to the multicast transmission mode.

For another example: which bearers are reserved is explicitly indicated in the RRC release message, so that the terminal releases the bearers that are not indicated to be reserved, and for the bearers that are explicitly indicated to be reserved, if there is a unicast transmission mode, the terminal can only release the logical channel and related configuration corresponding to the unicast transmission mode, and reserve the logical channel and related configuration corresponding to the multicast transmission mode.

As an optional implementation, the reserving the first bearer, in a case that the service transmission mode of the first bearer includes at least one of the first transmission mode or the second transmission mode, including: reserving a configuration associated with a first logical channel in the first bearer, and releasing a configuration associated with a second logical channel in the first bearer, where the service transmission mode of the first logical channel is the first transmission mode, and the service transmission mode of the second logical channel is the second transmission mode.

Optionally, the configuration associated with the first logical channel includes at least one of following: an RLC entity associated with the first logical channel, a MAC configuration associated with the first logical channel, or a radio resource associated with the first logical channel; and/or the configuration associated with the second logical channel includes at least one of following: the RLC entity associated with the second logical channel, the MAC configuration associated with the second logical channel, or the radio resource associated with the second logical channel.

In this embodiment, when the first bearer is reserved, only the logical channel of the first transmission mode and related configuration can be reserved, and in a case that the service transmission mode also includes the second transmission mode, the logical channel of the second transmission mode and related configuration can be released. That is to say, when the terminal releases the RRC connection, only bearers (or resources) in the unicast transmission mode are performed to be released; while bearers that can transmit services through the first transmission mode are reserved.

For example: for the first transmission mode not included indicated in the RRC configuration, or the DRB including only the RLC configuration/logical channel of the second transmission mode, the DRB configuration and related resources are directly released.

Another example: for bearer in which the service transmission mode includes the first transmission mode indicated in the RRC configuration, or DRB only associated with the RLC configuration/logical channel of the first transmission mode, no operation is required when the RRC connection is released.

Another example: for bearer in which the service transmission mode includes the first transmission mode indicated in the RRC configuration, and DRB associated with both the first transmission mode and the second transmission mode at the same time, or DRB associated with RLC configuration/logical channel of the first transmission mode or the second transmission mode at the same time, when the RRC connection is released, only at least one of the RLC entity, MAC configuration, or radio resource related to the unicast transmission mode is released, while at least one of the RLC entity, MAC configuration, or radio resource related to the multicast transmission mode is reserved.

As an optional implementation, the method also includes: reporting service information corresponding to the first transmission mode to a network side, when the terminal establishes or restores the RRC connection, in a case that the service transmission mode of the first bearer includes the first transmission mode.

After the network device receives the above service information, it can know that the terminal reserves the bearer corresponding to the above first transmission mode, so that the related actions can be performed for this behavior, for example: avoiding reconfiguring the configuration content corresponding to the above service information for the terminal, or transmitting, by the network device, the service data to the terminal in the first transmission mode according to the above service information. It should be noted that, in the embodiments of the present disclosure, the behaviors of the network device are not limited.

Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

The above embodiment can realize the reporting the bearer identification and/or logical channel identification/service identification for the bearer of the first transmission mode currently used, when the terminal establishes or restores the RRC connection, and further, the related configuration information of bear can also be reported, for example: at least one of SDAP, PDCP, RLC, MAC, or PHY configuration information.

For example: after the RRC connection is released, if it is released to the idle state, the network side will delete all terminal context information; if it is released to the inactive state, the network side will delete part of the terminal context information; for the multicast data that the terminal in the idle state/inactive state can continue to receive, the terminal stores related entities and corresponding identification information, such as DRB identification, logical channel identification.

After the terminal establishes/restores the RRC connection, the network side may not know the identification information that the terminal has used. If the configuration on the network side conflicts with the identification information being used by the current terminal, it may cause wrong configuration of the bearer. Therefore, when the terminal establishes/restores the RRC connection, it reports the above-mentioned service for the bearer of the currently used transmission multicast service type. Therefore, after being obtained by the network device, these existing identifications can be avoided to establish other unicast service bearers for the terminal, and/or RLC entity/logical channel and related configuration information of the unicast transmission mode are added for the multicast service according to the existing identification and configuration information.

In the embodiments of the present disclosure, the terminal determines the service transmission mode or the indication content of the RRC release message; the terminal reserves the first bearer according to the indication content or the service transmission mode, when the terminal releases the RRC connection, where the service transmission mode is the service transmission mode of the first bearer. In this way, the first bearer can be reserved when the RRC connection is released, thereby improving the service transmission capability of the terminal.

Referring to FIG. 5, FIG. 5 is a flowchart of an information indication method provided by an embodiment of the present disclosure. As shown in FIG. 5, it includes the following steps: Step 501, transmitting, by a network device, an RRC message to a terminal, where an RRC indicates a service transmission mode or an indication content of an RRC release message, and the service transmission mode is a service transmission mode of a first bearer.

Optionally, the service transmission mode includes a first transmission mode, and the first transmission mode is multicast, groupcast, or broadcast.

Optionally, the RRC message includes: RRC configuration information.

Optionally, the RRC configuration information indicates that the service transmission mode of the first bearer is one of following: the first transmission mode;
the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or Packet Data Convergence Protocol (PDCP) configuration; or the RRC configuration information explicitly or implicitly indicates the service transmission mode of the first bearer through Radio Link Control (RLC) configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the RRC message includes the RRC release message, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the method further includes: receiving service information reported by the terminal corresponding to the first transmission mode, when the terminal establishes or restores an RRC connection, in a case that the service transmission mode of the first bearer includes the first transmission mode.

Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

It should be noted that this embodiment is an implementation of a network device corresponding to the embodiment shown in FIG. 2, for the specific implementation, refer to the relevant description of the embodiment shown in FIG. 2. In order to avoid repeated descriptions, this embodiment will not be described again, and the same beneficial effect can also be achieved.

Referring to FIG. 6, FIG. 6 is a structural view of a terminal provided by an embodiment of the present disclosure. As shown in FIG. 6, it includes a memory 620, a transceiver 600, and a processor 610, where the memory 620 is used for storing computer program; the transceiver 600 is used for transmitting and receiving data under the control of the processor 610; and the processor 610 is used for reading the computer program in the memory 620 and performing the following operations: determining a service transmission mode or an indication content of an RRC release message; and reserving a first bearer, according to the indication content or the service transmission mode, when the terminal releases an RRC connection, where the service transmission mode is a service transmission mode of the first bearer.

The transceiver 600, used for receiving and transmitting data under the control of the processor 610.

In FIG. 6, the bus architecture may include any number of interconnected buses and bridges, specifically one or more processors represented by the processor 610 and various circuits of the memory represented by the memory 620 are linked together. The bus architecture can also link together various other circuits such as peripherals, voltage regulators, and power management circuits, which are well known in the art and therefore will not be further described herein. The bus interface provides the interface. The transceiver 600 may be a plurality of elements, including a transmitter and a receiver that provides units for communicating with various other devices over transmission media, these transmission media include transmission media such as wireless channels, wired channels, and optical cables. For different user devices, the user interface 630 may also be an interface capable of connecting externally and internally to required device, and the connected device includes but not limited to a keypad, a display, a speaker, a microphone, a joystick, and the like.

The processor 610 is responsible for managing the bus architecture and general processing, and the memory 620 may store data used by the processor 600 when performing operations.

Optionally, the processor 610 may be a CPU (Central Processing Device), ASIC (Application Specific Integrated Circuit), FPGA (Field-Programmable Gate Array) or CPLD (Complex Programmable Logic Device), and the processor can also adopt a multi-core architecture.

The processor is used to perform any one of the methods provided by the embodiments of the present disclosure according to the obtained executable instructions by calling the computer program stored in the memory. The processor and memory may also be physically arranged in a separated manner.

Optionally, the reserving the first bearer, according to the service transmission mode, when the terminal releases the RRC connection includes: reserving the first bearer, when the terminal releases the RRC connection, in a case that the service transmission mode includes a first transmission mode, where the first transmission mode is multicast, groupcast, or broadcast.

Optionally, the determining, by the terminal, the service transmission mode of the bearer includes: receiving, by the terminal, an RRC configuration information of the first bearer, and determining the service transmission mode of the first bearer according to the RRC configuration information.

Optionally, the RRC configuration information indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the reserving the first bearer, according to the indication content, when the terminal releases the RRC connection, including: reserving the first bearer, when the terminal releases the RRC connection, in a case that the bearer to be released indicated by the indication content does not include the first bearer; or reserving the first bearer, when the terminal releases the RRC connection, in a case that the bearer to be reserved indicated by the indication content includes the first bearer.

Optionally, the processor 610 is further used for: releasing a second bearer, when the terminal releases the RRC connection, in a case that the bearer to be released indicated by the indication content includes the second bearer; or releasing the second bearer, when the terminal releases the RRC connection, in a case that the bearer to be reserved indicated by the indication content does not include the second bearer; a service transmission mode of the second bearer includes the first transmission mode, where the first transmission mode is multicast, groupcast, or broadcast.

Optionally, the reserving the first bearer, in a case that the service transmission mode of the first bearer includes the first transmission mode and the second transmission mode, including: reserving a configuration associated with a first logical channel in the first bearer, and releasing a configuration associated with a second logical channel in the first bearer, where the service transmission mode of the first logical channel is the first transmission mode, and the service transmission mode of the second logical channel is the second transmission mode.

Optionally, the configuration associated with the first logical channel includes at least one of following: an RLC entity associated with the first logical channel, a MAC configuration associated with the first logical channel, or a radio resource associated with the first logical channel; and/or the configuration associated with the second logical channel includes at least one of following: the RLC entity associated with the second logical channel, the MAC configuration associated with the second logical channel, or the radio resource associated with the second logical channel.

Optionally, the processor 610 is also used for: reporting service information corresponding to the first transmission mode to a network side, when the terminal establishes or restores the RRC connection, in a case that the service transmission mode of the first bearer includes the first transmission mode.

Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

What needs to be explained here is that the above-mentioned terminal provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

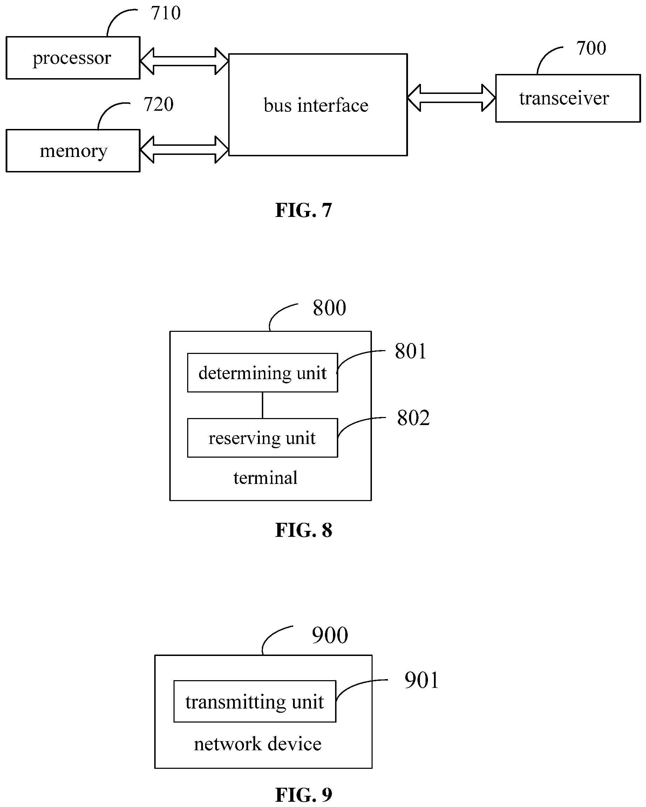

Referring to FIG. 7, FIG. 7 is a structural view of a network device provided by an embodiment of the present disclosure. As shown in FIG. 7, it includes a memory 720, a transceiver 700, and a processor 710, where the memory 720 is used for storing computer program; the transceiver 700 is used for transmitting and receiving data under the control of the processor 710; the processor 710 is used for reading the computer program in the memory 720 and performing the following operations: transmitting an RRC message to a terminal, where an RRC indicates a service transmission mode or an indication content of an RRC release message, and the service transmission mode is a service transmission mode of a first bearer.

The transceiver 700 is used for receiving and transmitting data under the control of the processor 710.

In FIG. 7, the bus architecture may include any number of interconnected buses and bridges, specifically one or more processors represented by the processor 710 and various circuits of the memory represented by the memory 720 are linked together. The bus architecture can also link together various other circuits such as peripherals, voltage regulators, and power management circuits, which are well known in the art and therefore will not be further described herein. The bus interface provides the interface. The transceiver 700 may be a plurality of elements, including a transmitter and a receiver that provide units for communicating with various other devices over transmission media, these transmission media include wireless channels, wired channels, optical cables, and other transmission media. The processor 710 is responsible for managing the bus architecture and general processing, and the memory 720 may store data used by the processor 710 when performing operations.

The processor 710 may be a Central Processor (CPU), an Application Specific Integrated Circuit (ASIC), a Field-Programmable Gate Array (FPGA) or a Complex Programmable Logic Device (CPLD), and the processor can also adopt a multi-core architecture.

The processor is used to perform any one of the methods provided by the embodiments of the present disclosure according to the obtained executable instructions by calling the computer program stored in the memory. The processor and memory may also be physically arranged in a separated manner.

Optionally, the service transmission mode includes a first transmission mode, and the first transmission mode is multicast, groupcast, or broadcast.

Optionally, the RRC message includes RRC configuration information.

Optionally, the RRC configuration information indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the RRC message includes an RRC release message, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the processor 710 is also used for: receiving service information reported by the terminal corresponding to the first transmission mode, when the terminal establishes or restores an RRC connection, in a case that the service transmission mode of the first bearer includes the first transmission mode.

Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

What needs to be explained here is that the above-mentioned network device provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

Referring to FIG. 8, FIG. 8 is a structural view of a terminal provided by an embodiment of the present disclosure. As shown in FIG. 8, the terminal 800 includes: a determining unit 801, configured to determine a service transmission mode or an indication content of an RRC release message; and a reserving unit 802, configured to reserve a first bearer, according to the indication content or the service transmission mode, when the terminal releases an RRC connection, where the service transmission mode is a service transmission mode of the first bearer.

Optionally, the reserving unit 802 is configured to reserve the first bearer, when the terminal releases the RRC connection, in a case that the service transmission mode includes a first transmission mode, where the first transmission mode is multicast, groupcast, or broadcast.

Optionally, the determining unit 801 is configured to receive an RRC configuration information of the first bearer, and determine the service transmission mode of the first bearer according to the RRC configuration information.

Optionally, the RRC configuration information indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the reserving unit 802 is configured to reserve the first bearer, when the terminal releases the RRC connection, in a case that the bearer to be released indicated by the indication content does not include the first bearer; or the reserving unit 802 is configured to reserve the first bearer, when the terminal releases the RRC connection, in a case that the bearer to be reserved indicated by the indication content includes the first bearer.

Optionally, the terminal 800 also includes: a first releasing unit, configured to release a second bearer, when the terminal releases the RRC connection, in a case that the bearer performed to released indicated by the indication content includes the second bearer; or a second releasing unit, configured to release the second bearer, when the terminal releases the RRC connection, in a case that the bearer to be reserved indicated by the indication content does not include the second bearer; a service transmission mode of the second bearer includes the first transmission mode, where the first transmission mode is multicast, groupcast, or broadcast.

Optionally, the reserving the first bearer, in a case that the service transmission mode of the first bearer includes the first transmission mode and the second transmission mode, including: reserving a configuration associated with a first logical channel in the first bearer, and releasing a configuration associated with a second logical channel in the first bearer, where the service transmission mode of the first logical channel is the first transmission mode, and the service transmission mode of the second logical channel is the second transmission mode.

Optionally, the configuration associated with the first logical channel includes at least one of following: an RLC entity associated with the first logical channel, a MAC configuration associated with the first logical channel, or a radio resource associated with the first logical channel; and/or the configuration associated with the second logical channel includes at least one of following: the RLC entity associated with the second logical channel, the MAC configuration associated with the second logical channel, or the radio resource associated with the second logical channel.

Optionally, the terminal further includes: a reporting unit, configured to report service information corresponding to the first transmission mode to a network side, when the terminal establishes or restores the RRC connection, in a case that the service transmission mode of the first bearer includes the first transmission mode; Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

What needs to be explained here is that the above-mentioned terminal provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

Referring to FIG. 9, FIG. 9 is a structural view of a network device provided by an embodiment of the present disclosure. As shown in FIG. 9, the network device 900 includes: a transmitting unit 901, configured to transmit an RRC message to a terminal, where an RRC indicates a service transmission mode or an indication content of an RRC release message, and the service transmission mode is a service transmission mode of a first bearer.

Optionally, the service transmission mode includes a first transmission mode, and the first transmission mode is multicast, groupcast, or broadcast.

Optionally, the RRC message includes: RRC configuration information.

Optionally, the RRC configuration information indicates that the service transmission mode of the first bearer is one of following: the first transmission mode; the first transmission mode and a second transmission mode; or the second transmission mode, where the first transmission mode is multicast, groupcast, or broadcast, and the second transmission mode is unicast.

Optionally, the RRC configuration information indicates the service transmission mode of the first bearer through bearer configuration or PDCP configuration; or the RRC configuration information explicitly or implicitly indicates the service transmission mode of the first bearer through RLC configuration or logical channel configuration.

Optionally, the RLC configuration or logical channel configuration is used for explicitly indicating a service transmission mode of an RLC entity or a logical channel; or in a case that no logical channel is configured for the RLC configuration, the RLC configuration implicitly indicates that the service transmission mode of the RLC entity or the logical channel is the first transmission mode.

Optionally, the RRC message includes an RRC release message, the indication content indicates at least one of following: a bearer to be released, or a bearer to be reserved.

Optionally, the bearer to be released includes: a bearer to be released in which a service transmission mode includes a first transmission mode, where the first transmission mode is multicast, groupcast, or broadcast.

Optionally, the network device further includes: a receiving unit, configured to receive service information reported by the terminal corresponding to the first transmission mode, when the terminal establishes or restores an RRC connection, in a case that the service transmission mode of the first bearer includes the first transmission mode.

Optionally, the service information includes at least one of following: bearer identification, logical channel identification, or, service identification.

Optionally, the service information further includes at least one of following: SDAP configuration information associated with the first transmission mode, PDCP configuration information associated with the first transmission mode, RLC configuration information associated with the first transmission mode, MAC configuration information associated with the first transmission mode, or physical PHY configuration information associated with the first transmission mode.

Optionally, the terminal reports the service information through the following item: establishing request message, restoring request message, establishing complete message, or restoring complete message.

What needs to be explained here is that the above-mentioned network device provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

It should be noted that the division of the units in the embodiments of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on this understanding, the essence of the technical solution of the present disclosure or the part that contributes to the related technology or all or part of the technical solution can be embodied in the form of a software product, and the computer software product is stored in a storage medium. Several instructions are included to enable a computer device (which may be a personal computer, a server, or a network device, etc.) or a processor (processor) to perform all or part of the steps of the methods described in the various embodiments of the present disclosure. The aforementioned storage media include: U disk, mobile hard disk, Read-Only Memory (ROM), Random Access Memory (RAM), magnetic disk or optical disk and other media that can store program codes.

The embodiments of the present disclosure also provide a processor-readable storage medium, where the processor-readable storage medium stores a computer program, the computer program is used to enable the processor to perform the service processing method provided by the embodiments of the present disclosure, or the computer program is used to enable the processor to perform the information indication method provided by the embodiments of the present disclosure.

The processor-readable storage medium may be any available medium or data storage device that the processor can access, including but not limited to magnetic memory (such as soft disk, hard disk, tape, magnet disk (MO), etc.), optical memory (for example, CD, DVD, BD, HVD, etc.), as well as semiconductor memory (such as ROM, EPROM, EEPROM, NAND Flash, solid -state hard disk (SSD)), etc.

Those skilled in the art should understand that the embodiments of the present disclosure can provide products, systems, or computer program products. Therefore, the present disclosure can adopt the form of full hardware embodiments, full software embodiments, or embodiments in combination with software and hardware. Moreover, the present disclosure can be used in the form of a computer program product implemented on one or more computer usable storage media (including but not limited to disk memory and optical memory, etc.) containing computer usable program codes.

It is understood that these embodiments described in the present disclosure can be achieved with hardware, software, firmware, middleware, microcodes, or their combinations. For hardware implementation, modules, units, sub-modules, sub-units, etc. can be realized in one or more Application Specific Integrated Circuits (ASIC), Digital Signal Processing (DSP), DSP Devices (DSPD), Programmable Logic Devices (PLD), Field-Programmable Gate Arrays (FPGA), general processors, controllers, microcontrollers, microprocessors, or other electronic units or combinations used to perform the functions described in the present disclosure.

The present disclosure is described by reference to the flowcharts and/or block diagrams of methods, devices (systems), and computer program products. It should be understood that the computer can execute the instruction to implement each process and/or box in the flowchart and/or block diagram, as well as the combination of the process and / or box in the flowchart and/or block diagram. These computers can be provided with processors that can execute instructions to general computers, dedicated computers, embedded processing machines or other programmable data processing devices to generate a machine, so that the instructions executed by the processor of the computer or other programmable data processing device generates an apparatus used to implement functions specified in one or more processes of the flowcharts and/or one or more boxes of the block diagrams.

These processors can execute instructions or can be stored in a processor-readable memory that can guide computers or other programmable data processing devices to work in a specific manner, so that the instructions stored in the processor-readable memory can produce a manufacturing including an instruction apparatus, the instruction apparatus implements functions specified in one or more processes of the flowcharts and/or one or more boxes of the block diagrams.

These processors may execute instructions or may be loaded on the computer or other programmable data processing devices, so that a series of operation steps are performed on the computer or other programming devices to generate a processing implemented by the computer, so the instructions executed on the computer or other programmable devices provide steps used to implement functions specified in one or more processes of the flowcharts and/or one or more boxes of the block diagrams.

Obviously, those skilled in the art can make various changes and deformations on the present disclosure without departing from the spirit and scope of the present disclosure. In this way, if these changes and deformations of the present disclosure are within the scope of the claims of the present disclosure and their equivalent technology, the present disclosure is also intended to include these changes and deformations.

## Claims

1. A service processing method, comprising:
determining, by a terminal, a service transmission mode or an indication content of a Radio Resource Control (RRC) release message; and
reserving, by the terminal, a first bearer, according to the indication content or the service transmission mode, when the terminal releases an RRC connection, wherein the service transmission mode is a service transmission mode of the first bearer.

2. The method according to claim 1, wherein the reserving the first bearer, according to the service transmission mode, when the terminal releases the RRC connection comprises:
reserving the first bearer, when the terminal releases the RRC connection, in a case that the service transmission mode comprises a first transmission mode,
wherein the first transmission mode is multicast, groupcast, or broadcast.

3. The method according to claim 1 or 2, wherein the determining, by the terminal, the service transmission mode comprises:
receiving, by the terminal, an RRC configuration information of the first bearer, and determining the service transmission mode of the first bearer according to the RRC configuration information.

4. The method according to claim 3, wherein the RRC configuration information indicates that the service transmission mode of the first bearer is one of following:
the first transmission mode;
the first transmission mode and a second transmission mode; or
the second transmission mode,
wherein the first transmission mode is multicast, groupcast, or broadcast, and the second transmission mode is unicast.

5. The method according to claim 3, wherein the RRC configuration information indicates the service transmission mode of the first bearer through bearer configuration or Packet Data Convergence Protocol (PDCP) configuration; or
the RRC configuration information explicitly or implicitly indicates the service transmission mode of the first bearer through Radio Link Control (RLC) configuration or logical channel configuration.

6. The method according to claim 5, wherein the RLC configuration or logical channel configuration is used for explicitly indicating a service transmission mode of an RLC entity or a logical channel; or
in a case that no logical channel is configured for the RLC configuration, the RLC configuration implicitly indicates that the service transmission mode of the RLC entity or the logical channel is the first transmission mode.

7. The method according to claim 1, wherein the indication content indicates at least one of following:
a bearer to be released, or a bearer to be reserved.

8. The method according to claim 7, wherein the bearer to be released comprises:
a bearer to be released in which a service transmission mode comprises a first transmission mode,
wherein the first transmission mode is multicast, groupcast, or broadcast.

9. The method according to claim 7 or 8, wherein the reserving the first bearer, according to the indication content, when the terminal releases the RRC connection comprises:
reserving the first bearer, when the terminal releases the RRC connection, in a case that the bearer to be released indicated by the indication content does not comprise the first bearer; or
reserving the first bearer, when the terminal releases the RRC connection, in a case that the bearer to be reserved indicated by the indication content comprises the first bearer.

10. The method according to claim 7 or 8, further comprising:
releasing a second bearer, when the terminal releases the RRC connection, in a case that the bearer to be released indicated by the indication content comprises the second bearer; or
releasing the second bearer, when the terminal releases the RRC connection, in a case that the bearer to be reserved indicated by the indication content does not comprise the second bearer;
a service transmission mode of the second bearer comprises the first transmission mode,
wherein the first transmission mode is multicast, groupcast, or broadcast.

11. The method according to claim 1, 2, 7 or 8, wherein the reserving the first bearer, in a case that the service transmission mode of the first bearer comprises at least one of the first transmission mode or the second transmission mode, comprising:
reserving a configuration associated with a first logical channel in the first bearer, and releasing a configuration associated with a second logical channel in the first bearer,
wherein the service transmission mode of the first logical channel is the first transmission mode, and the service transmission mode of the second logical channel is the second transmission mode.

12. The method according to claim 11, wherein the configuration associated with the first logical channel comprises: at least one or more of an RLC entity associated with the first logical channel, a Medium Access Control (MAC) configuration associated with the first logical channel, or a radio resource associated with the first logical channel;
the configuration associated with the second logical channel comprises: at least one or more of the RLC entity associated with the second logical channel, the MAC configuration associated with the second logical channel, or the radio resource associated with the second logical channel.

13. The method according to claim 1, 2, 7 or 8, further comprising:
reporting service information corresponding to the first transmission mode to a network side, when the terminal establishes or restores the RRC connection, in a case that the service transmission mode of the first bearer comprises the first transmission mode.

14. An information indication method, comprising:
transmitting, by a network device, an RRC message to a terminal, wherein an RRC indicates a service transmission mode or an indication content of an RRC release message, and the service transmission mode is a service transmission mode of a first bearer.

15. The method according to claim 14, wherein the service transmission mode comprises a first transmission mode, and the first transmission mode is multicast, groupcast, or broadcast.

16. The method according to claim 14 or 15, wherein the RRC message comprises: RRC configuration information.

17. The method according to claim 14, wherein the RRC message comprises the RRC release message, and the indication content indicates at least one of following:
a bearer to be released, or a bearer to be reserved.

18. The method according to claim 17, wherein the bearer to be released comprises:
a bearer to be released in which the service transmission mode comprises the first transmission mode,
wherein the first transmission mode is multicast, groupcast, or broadcast.

19. The method according to claim 14, 15, 17 or 18, further comprising:
receiving service information reported by the terminal corresponding to the first transmission mode, when the terminal establishes or restores an RRC connection, in a case that the service transmission mode of the first bearer comprises the first transmission mode.

20. A terminal, comprising a memory, a transceiver and a processor,
wherein the memory is used for storing computer program; the transceiver is used for transmitting and receiving data under control of the processor; the processor is used for reading the computer program in the memory and performing following operations:
determining a service transmission mode or an indication content of an RRC release message; and
reserving a first bearer, according to the indication content or the service transmission mode, when the terminal releases an RRC connection, wherein the service transmission mode is a service transmission mode of the first bearer.

21. The terminal according to claim 20, wherein the reserving the first bearer, according to the service transmission mode, when the terminal releases the RRC connection comprises:
reserving the first bearer, when the terminal releases the RRC connection, in a case that the service transmission mode comprises a first transmission mode,
wherein the first transmission mode is multicast, groupcast, or broadcast.

22. The terminal according to claim 20 or 21, wherein the determining the service transmission mode comprises:
receiving, by the terminal, an RRC configuration information of the first bearer, and determining the service transmission mode of the first bearer according to the RRC configuration information.

23. The terminal according to claim 22, wherein the RRC configuration information indicates that the service transmission mode of the first bearer is one of following:
the first transmission mode;
the first transmission mode and a second transmission mode; or
the second transmission mode,
wherein the first transmission mode is multicast, groupcast, or broadcast, and the second transmission mode is unicast.

24. The terminal according to claim 22, wherein the RRC configuration information indicates the service transmission mode of the first bearer through bearer configuration or PDCP configuration; or
the RRC configuration information explicitly or implicitly indicates the service transmission mode of the first bearer through RLC configuration or logical channel configuration.

25. The terminal according to claim 24, wherein the RLC configuration or logical channel configuration is used for explicitly indicating a service transmission mode of an RLC entity or a logical channel; or
in a case that no logical channel is configured for the RLC configuration, the RLC configuration implicitly indicates that the service transmission mode of the RLC entity or the logical channel is the first transmission mode.

26. The terminal according to claim 20, wherein the indication content indicates at least one of following:
a bearer to be released, or a bearer to be reserved.

27. The terminal according to claim 26, wherein the bearer to be released comprises:
a bearer to be released in which a service transmission mode comprises a first transmission mode,
wherein the first transmission mode is multicast, groupcast, or broadcast.

28. The terminal according to claim 26 or 27, wherein the reserving the first bearer, according to the indication content, when the terminal releases the RRC connection comprises:
reserving the first bearer, when the terminal releases the RRC connection, in a case that the bearer to be released indicated by the indication content does not comprise the first bearer; or
reserving the first bearer, when the terminal releases the RRC connection, in a case that the bearer to be reserved indicated by the indication content comprises the first bearer.

29. The terminal according to claim 26 or 27, wherein the processor is further used for:
releasing a second bearer, when the terminal releases the RRC connection, in a case that the bearer to be released indicated by the indication content comprises the second bearer; or
releasing the second bearer, when the terminal releases the RRC connection, in a case that the bearer to be reserved indicated by the indication content does not comprise the second bearer;
a service transmission mode of the second bearer comprises the first transmission mode,
wherein the first transmission mode is multicast, groupcast, or broadcast.

30. The terminal according to claim 20, 21, 26 or 27, wherein the reserving the first bearer, in a case that the service transmission mode of the first bearer comprises at least one of the first transmission mode or the second transmission mode, comprising:
reserving a configuration associated with a first logical channel in the first bearer, and releasing a configuration associated with a second logical channel in the first bearer,
wherein the service transmission mode of the first logical channel is the first transmission mode, and the service transmission mode of the second logical channel is the second transmission mode.

31. The terminal according to claim 30, wherein the configuration associated with the first logical channel comprises: at least one or more of an RLC entity associated with the first logical channel, a MAC configuration associated with the first logical channel, or a radio resource associated with the first logical channel;
the configuration associated with the second logical channel comprises: at least one or more of the RLC entity associated with the second logical channel, the MAC configuration associated with the second logical channel, or the radio resource associated with the second logical channel.

32. The terminal of claim 20, 21, 26 or 27, wherein the processor is further used for:
reporting service information corresponding to the first transmission mode to a network side, when the terminal establishes or restores the RRC connection, in a case that the service transmission mode of the first bearer comprises the first transmission mode.

33. A network device, comprising a memory, a transceiver, and a processor:
the memory is used for storing computer program; the transceiver is used for transmitting and receiving data under control of the processor; the processor is used for reading the computer program in the memory and performing following operations:
transmitting an RRC message to a terminal, wherein an RRC indicates a service transmission mode or an indication content of an RRC release message, and the service transmission mode is a service transmission mode of a first bearer.

34. The network device according to claim 33, wherein the service transmission mode comprises a first transmission mode, and the first transmission mode is multicast, groupcast, or broadcast.

35. The network device according to claim 33 or 34, wherein the RRC message comprises: RRC configuration information.

36. The network device according to claim 33, wherein the RRC message comprises an RRC release message, the indication content indicates at least one of following:
a bearer to be released, or a bearer to be reserved.

37. The network device according to claim 36, wherein the bearer to be released comprises:
a bearer to be released in which a service transmission mode comprises a first transmission mode,
wherein the first transmission mode is multicast, groupcast, or broadcast.

38. The network device of claim 33, 34, 36 or 37, wherein the processor is further used for:
receiving service information reported by the terminal corresponding to the first transmission mode, when the terminal establishes or restores an RRC connection, in a case that the service transmission mode of the first bearer comprises the first transmission mode.

39. A terminal, comprising:
a determining unit, configured to determine a service transmission mode or an indication content of an RRC release message; and
a reserving unit, configured to reserve a first bearer, according to the indication content or the service transmission mode, when the terminal releases an RRC connection, wherein the service transmission mode is a service transmission mode of the first bearer.

40. The terminal according to claim 39, wherein the reserving unit is configured to reserve the first bearer, when the terminal releases the RRC connection, in a case that the service transmission mode comprises a first transmission mode,
wherein the first transmission mode is multicast, groupcast, or broadcast.

41. The terminal according to claim 39 or 40, wherein the determining unit is configured to receive an RRC configuration information of the first bearer, and determine the service transmission mode of the first bearer according to the RRC configuration information.

42. The terminal according to claim 41, wherein the RRC configuration information indicates that the service transmission mode of the first bearer is one of following:
the first transmission mode;
the first transmission mode and a second transmission mode; or
the second transmission mode,
wherein the first transmission mode is multicast, groupcast, or broadcast, and the second transmission mode is unicast.

43. The terminal according to claim 41, wherein the RRC configuration information indicates the service transmission mode of the first bearer through bearer configuration or PDCP configuration; or
the RRC configuration information explicitly or implicitly indicates the service transmission mode of the first bearer through RLC configuration or logical channel configuration.

44. The terminal according to claim 43, wherein the RLC configuration or logical channel configuration is used for explicitly indicating a service transmission mode of an RLC entity or a logical channel; or
in a case that no logical channel is configured for the RLC configuration, the RLC configuration implicitly indicates that the service transmission mode of the RLC entity or the logical channel is the first transmission mode.

45. The terminal according to claim 39, wherein the indication content indicates at least one of following:
a bearer to be released, or a bearer to be reserved.

46. The terminal according to claim 45, wherein the bearer to be released comprises:
a bearer to be released in which a service transmission mode comprises a first transmission mode,
wherein the first transmission mode is multicast, groupcast, or broadcast.

47. The terminal according to claim 45 or 46, wherein the reserving unit is configured to reserve the first bearer, when the terminal releases the RRC connection, in a case that the bearer to be released indicated by the indication content does not comprise the first bearer; or
the reserving unit is configured to reserve the first bearer, when the terminal releases the RRC connection, in a case that the bearer to be reserved indicated by the indication content comprises the first bearer.

48. The terminal according to claim 45 or 46, wherein the terminal further comprises:
a first releasing unit, configured to release a second bearer, when the terminal releases the RRC connection, in a case that the bearer to be released indicated by the indication content comprises the second bearer; or
a second releasing unit, configured to release the second bearer, when the terminal releases the RRC connection, in a case that the bearer to be reserved indicated by the indication content does not comprise the second bearer;
a service transmission mode of the second bearer comprises the first transmission mode,
wherein the first transmission mode is multicast, groupcast, or broadcast.

49. The terminal according to claim 39, 40, 45 or 46, wherein the reserving the first bearer, in a case that the service transmission mode of the first bearer comprises at least one of the first transmission mode or the second transmission mode, comprising:
reserving a configuration associated with a first logical channel in the first bearer, and releasing a configuration associated with a second logical channel in the first bearer,
wherein the service transmission mode of the first logical channel is the first transmission mode, and the service transmission mode of the second logical channel is the second transmission mode.

50. The terminal according to claim 49, wherein the configuration associated with the first logical channel comprises: at least one or more of an RLC entity associated with the first logical channel, a MAC configuration associated with the first logical channel, or a radio resource associated with the first logical channel;
the configuration associated with the second logical channel comprises: at least one or more of the RLC entity associated with the second logical channel, the MAC configuration associated with the second logical channel, or the radio resource associated with the second logical channel.

51. The terminal of claim 39, 40, 45 or 46, wherein the terminal further comprises:
a reporting unit, configured to report service information corresponding to the first transmission mode to a network side, when the terminal establishes or restores the RRC connection, in a case that the service transmission mode of the first bearer comprises the first transmission mode.

52. A network device, comprising:
a transmitting unit, configured to transmit an RRC message to a terminal, wherein an RRC indicates a service transmission mode or an indication content of an RRC release message, and the service transmission mode is a service transmission mode of a first bearer.

53. The network device according to claim 52, wherein the service transmission mode comprises a first transmission mode, and the first transmission mode is multicast, groupcast, or broadcast.

54. The network device according to claim 52 or 53, wherein the RRC message comprises: RRC configuration information.

55. The network device according to claim 52, wherein the RRC message comprises an RRC release message, the indication content indicates at least one of following:
a bearer to be released, or a bearer to be reserved.

56. The network device according to claim 55, wherein the bearer to be released comprises:
a bearer to be released in which a service transmission mode comprises a first transmission mode,
wherein the first transmission mode is multicast, groupcast, or broadcast.

57. The network device of claim 52, 53, 55 or 56, wherein the network device further comprises:
a receiving unit, configured to receive service information reported by the terminal corresponding to the first transmission mode, when the terminal establishes or restores an RRC connection, in a case that the service transmission mode of the first bearer comprises the first transmission mode.

58. A processor-readable storage medium, wherein the processor-readable storage medium stores a computer program, and the computer program is used for enabling the processor to perform the service processing method according to any one of claims 1 to 13, or, the computer program is used for enabling the processor to perform the information indication method according to any one of claims 14 to 19.

59. A computer program product, wherein the program product is stored in a non-volatile storage medium, and the program product is executed by at least one processor to implement the service processing method according to any one of claims 1-13, or, the computer program product is executed by at least one processor to implement the information indication method according to any one of claims 14 to 19.

60. A terminal, wherein the terminal is configured to perform the service processing method according to any one of claims 1-13.

61. A network device, wherein the network device is configured to perform the information indication method according to any one of claims 14 to 19.
